(19) Europäisches Patentamt
European Patent Office
Office européen des brevets

(11) Veröffentlichungsnummer: **0 412 499 A2**

(12) **EUROPÄISCHE PATENTANMELDUNG**

(21) Anmeldenummer: **90115142.3**

(51) Int. Cl.[5]: **C08G 65/40**

(22) Anmeldetag: **07.08.90**

(30) Priorität: **09.08.89 DE 3926262**

(43) Veröffentlichungstag der Anmeldung: **13.02.91 Patentblatt 91/07**

(84) Benannte Vertragsstaaten: **AT BE CH DE DK ES FR GB GR IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Fischer, Hartmut, Dr.**
**Wilhelm-Leuschner-Strasse 5**
**D-6238 Hofheim am Taunus(DE)**
Erfinder: **Schneller, Arnold, Dr.**
**Asternweg 41**
**D-6500 Mainz(DE)**

(54) **Verfahren zur Herstellung eines aromatischen Polyethers in Gegenwart von feinverteilten Kondensationshilfsmitteln.**

(57) Bei dem Verfahren zur Herstellung eines aromatischen Polyethers durch Kondensation der Reaktionspartner in Gegenwart von Metallcarbonaten der ersten Gruppe des Periodischen Systems als Kondensationshilfsmittel, werden die Metallcarbonate Natriumcarbonat oder Natriumbicarbonat oder Gemische davon in Form von sehr fein gemahlenen Salzen eingesetzt.

Die feine Verteilung des Carbonats ermöglicht eine deutliche Verkürzung der Reaktionszeiten und erlaubt Polyether mit definiertem Kondensationsgrad reproduzierbar herzustellen.

EP 0 412 499 A2

# VERFAHREN ZUR HERSTELLUNG EINES AROMATISCHEN POLYETHERS IN GEGENWART VON FEINVERTEILTEN KONDENSATIONSHILFSMITTELN

Die Erfindung bezieht sich auf ein Verfahren zur Herstellung eines aromatischen Polyethers, der die Gruppen $-SO_2-$ und/oder -CO- enthält. Diese Polyether werden nachstehend als aromatische Polyetherketone oder als aromatische Polyethersulfone bezeichnet, je nachdem, ob die Keto- oder die Sulfonylgruppen überwiegen.

Aromatische Polyether sind als wertvolle Polymerklassen mit hohem Eigenschaftsniveau bekannt. Sie zeichnen sich durch hohe thermische Resistenz und sehr gute chemische Beständigkeit aus.

Aromatische Polyether lassen sich durch eine elektrophile Polykondensationsreaktion (Friedel-Crafts-Reaktion) von mehrkernigen aromatischen Säurehalogeniden (wobei mindestens ein Arylrest elektronenliefernde Substituenten tragen muß) herstellen, beispielsweise eines Phenoxyarylsäurechlorids, oder durch Kondensation eines Dicarbonsäurehalogenids mit einem elektronenreichen Aromaten, beispielsweise einem Diarylether (US-A 3 065 205).

Eine andere Synthesemöglichkeit ist die nukleophile Polykondensation von Halogenphenolen, wobei die Halogengruppe durch ortho- oder paraständige elektronegative Substituenten aktiviert ist, oder von zweiwertigen, ein- oder mehrkernigen Phenolen mit aktivierten Dihalogenaromaten. Bei der nukleophilen Polykondensation ist das aus dem Phenol durch Einwirken von Alkalien gebildete Phenolation das eigentliche Agens (DE-C 1 545 106 und CA-A 847 963).

Die Bildung der Phenolat-Ionen erfolgt entweder durch Umsetzung des Phenols mit z.B. Alkalihydroxiden und anschließendes Entfernen des Reaktionswassers durch azeotrope Destillation (DE-C 1 545 106) oder aber durch Zufügen von Alkalicarbonaten oder -bicarbonaten zu der Kondensationsmischung (CA-A 847 963). Als Alkalicarbonate werden hauptsächlich Kaliumcarbonat oder Mischungen aus Kalium- und Natriumcarbonat eingesetzt.

Mit Kaliumcarbonat oder Kaliumbicarbonat verläuft die Phenolatbildung sehr schnell und es lassen sich somit hochmolekulare Polyether erhalten. Nachteilig ist bei diesem Verfahren die Bildung von Gelteilchen, was eine Anwendung der Polyether bei der Herstellung von Folien ausschließt. Außerdem kommt es bei der Herstellung des Polyethers im Reaktor zur Bildung von schwarzen Partikeln (DE-P 28 03 873).

Es ist beispielsweise beschrieben, daß die alleinige Verwendung von Natriumcarbonat oder Natriumbicarbonat nur zur Bildung von spröden Polykondensaten mit geringem Molgewicht und schlechter Farbe führt (EP-B 1879). Die nachteilige Wirkung von Natriumcarbonat als Base zur Phenolatbildung in der Polyetherketonsynthese wird in dieser Patentschrift besonders dargelegt und die alleinige Verwendung von Natriumcarbonat oder Natriumbicarbonat ausgeschlossen.

Damit stimmt überein, daß in einer anderen Veröffentlichung ein Gemisch von Alkalimetallcarbonaten als Base vorgeschlagen wird (DE-A 28 03 873). Die Kombination von (viel) Natrium- mit (wenig) Kaliumcarbonat verkürzt die Reaktionszeit erheblich und erhöht den erreichbaren Endkondensationsgrad deutlich im Vergleich zur alleinigen Verwendung von Natriumcarbonat. Allerdings werden die ursächlich mit dem Kaliumcarbonat zusammenhängenden Probleme, wie Gelbildung und Bildung von schwarzen Partikeln nur reduziert, aber nicht ausgeschaltet. In Übereinstimmung mit der oben zitierten EP-B 1879 wird auch in der DE-A 28 03 873 beschrieben, daß Polykondensate, die nur mit Natriumcarbonat allein hergestellt worden sind, schlechter in Molgewicht, Zähigkeit und Farbe sind als Polykondensate, die mit Kaliumcarbonat oder Gemischen von Alkalicarbonaten hergestellt wurden. Auch ist bei Einsatz von Natriumcarbonat als Base nach 21 Stunden Reaktionszeit die reduzierte Viskosität des gebildeten Polykondensates deutlich niedriger als unter Verwendung von Kaliumcarbonat nach einer Stunde Reaktionszeit.

In einer anderen Veröffentlichung werden Gemische aus Natriumcarbonat und/oder Bicarbonat mit Kaliumfluorid oder höheren Metallhalogeniden als Kondensationshilfsmittel vorgeschlagen (EP-A 01 95 448). In der Beschreibung und in den Beispielen wird jedoch ausschließlich Natriumcarbonat und/oder Kaliumcarbonat mit Metallhalogeniden erwähnt bzw. verwendet. Auf einen Einfluß des Bicarbonates wird weder in der Beschreibung noch in den Beispielen eingegangen.

Bei der zusätzlichen Verwendung von Kaliumfluorid neben Carbonaten zur Polykondensation, die ein höheres Molekulargewicht in kürzerer Reaktionszeit bewirken soll, hat man aufgrund der ausgeprägten Korrosivität von Kaliumfluorid Vorkehrungen hinsichtlich dem Material der Reaktionsgefäße zu treffen.

Die Aufgabe der Erfindung bestand somit darin, ein Verfahren bereitzustellen, das die Herstellung von aromatischen Polyethern mit bestimmten, durch Reaktionskontrolle ansteuerbaren Molekulargewichten in kurzen Reaktionszeiten ermöglicht und Produkte liefert, die weitgehend frei von Gelanteilen und nicht verfärbt sind.

Die Erfindung betrifft ein Verfahren zur Herstellung eines aromatischen Polyethers durch Kondensation

der Reaktionspartner in Gegenwart von Metallcarbonaten der ersten Gruppe des Periodischen Systems als Kondensationshilfsmittel, gegebenenfalls in Gegenwart eines Lösungsmittels, bei dem die Metallcarbonate in Form von sehr fein gemahlenen Salzen, vorzugsweise Natriumcarbonat oder Natriumbicarbonat oder Gemischen davon, eingesetzt wurden. Als Kondensationshilfsmittel (Base zur Phenolatbildung) verwendet man insbesondere nur Natriumcarbonat, Natriumbicarbonat oder beliebige Mischungen dieser Stoffe, die durch eine vorgeschaltete Mahlung auf eine Korngrößenverteilung gebracht wurden, bei der 90 Gewichtsprozent eine Korngröße unter 50 µm ($D_{90}$-Wert ≦ 50 µm) aufweisen.

Die Herstellung von Metallcarbonaten wie Natriumcarbonat und Natriumbicarbonat mit einem $D_{90}$-Wert der Korngröße unter 50 µm kann mit handelsüblichen Mühlen erfolgen. So lassen sich herkömmliche Strahlmühlen wie Spiralstrahlmühlen, Ovalrohrstrahlmühlen, Gegenstrahlmühlen, Fließbettstrahlmühlen, Ballplattenstrahlmühlen mit Erfolg einsetzen. Ein Überblick über Mühlen und Mahlprozesse findet sich in K. Höffl, Zerkleinerungs- und Klassiermaschinen, (Springer Verlag, Berlin, 1986).

Je nach Anwendungsbedarf lassen sich Korngrößen mit verschiedenen $D_{90}$-Werten einstellen. Die verwendeten Korngrößen sind abhängig von den Komponenten, die zur Reaktion eingesetzt werden. Während bei der Polyethersulfonsynthese aufgrund der höheren Reaktivität der Monomeren bereits mit Natriumcarbonat bzw. Natriumbicarbonat mit einem $D_{90}$-Wert von ca. 50 µm erfolgreich kondensiert werden kann, erfordert die Polyetherketonsynthese feiner gemahlenes Material.

Bevorzugt werden für die Polyetherketonsynthese Metallcarbonate bzw. -bicarbonate mit einem $D_{90}$-Wert unter 30 µm, insbesondere unter 20 µm, eingesetzt.

Die Gesamtmenge an Carbonat ist im allgemeinen so bemessen, daß pro Mol Hydroxylgruppen mindestens ein Mol Metallatome vorhanden sind. In manchen Fällen kann sich ein Überschuß an Carbonat von bis zu 20 % empfehlen, so daß die Gesamtmenge an Carbonat erfindungsgemäß in den meisten Fällen 1 bis 1,2 Mol Metallatome pro Mol Hydroxylgruppen beträgt.

Die infolge der feinen Verteilung des Carbonats stark erhöhte Reaktivität ermöglicht nicht nur eine deutliche Verkürzung der Reaktionszeiten im Vergleich zum Stand der Technik, sondern darüberhinaus wird eine gezielte Ansteuerung des Endpunktes der Polykondensation möglich. Dazu wird so vorgegangen, daß die Dihalogenverbindung für sich oder in Lösung vorgelegt wird und bei der Reaktionstemperatur die Dihydroxykomponente zusammen mit dem fein gemahlenen Carbonat in dem Maße zugegeben wird, wie die Reaktion fortschreitet. Dadurch wird ein Überschuß an freier Dihydroxyverbindung im Reaktionsgemisch vermieden, wodurch Zersetzungsreaktionen ausgeschlossen werden, die als Ursache für Gelpartikel und Verfärbung anzusehen sind. Wenn die Stabilität der Dihalogenverbindung bei der gewählten Reaktionstemperatur der Kondensation gegen das feinverteilte Carbonat genügend groß ist, kann das Verfahren auch dahingehend variiert werden, daß zusammen mit der Dihalogenverbindung das Carbonat oder eine Teilmenge davon im Reaktionsgefäß vorgelegt wird und nur die Dihydroxyverbindung allein oder in Mischung mit der Restmenge an Carbonat in die reagierende Mischung eindosiert wird. Alle Varianten dieses Verfahrens ermöglichen es, die Polykondensation zu einem definierten Endpunkt zu fahren, der über die Viskosität des Systems genau definiert ist und damit Polyether mit definiertem Kondensationsgrad reproduzierbar herzustellen.

Unter dem Begriff "aromatische Polyether" werden Polymere verstanden, die neben dem Sauerstoffatom der Etherbindung auch andere Atome und/oder Gruppen in der Hauptkette enthalten können, wie Schwefelatome und/oder Carbonyl-, Imino-, Sulfonyl- und Sulfoxidgruppen sowie Alkylidengruppen mit 1 bis 3 C-Atomen in Rest, sowie halogenierte Alkylidenreste.

Die nach dem erfindungsgemäßen Verfahren erhaltenen Polyether sind hochmolekulare Verbindungen, deren inhärente Viskositäten (gemessen in einer Lösung von 0,5 g des Polymeren in 100 ml Lösungsmittel) im allgemeinen bei 50 bis 500 vorzugsweise 75 bis 300 ml/g liegen.

Die Herstellung der Polyether erfolgt erfindungsgemäß unter im allgemeinen üblichen Bedingungen und unter Umsatz der bekannten Reaktionspartner (Monomeren), also beispielsweise von zweiwertigen Phenolen mit aktivierten aromatischen Dihalogenverbindungen oder von mehrkernigen aktivierten Halogenphenolen, in denen das Halogen an einem anderen aromatischen Kern als die Hydroxylgruppe steht, oder von derartigen Halogenphenolen mit einander äquivalenten Mengen von zweiwertigen Phenolen und aktivierten aromatischen Dihalogenverbindungen.

Im erstgenannten Fall, also bei Umsatz von zweiwertigen Phenolen mit aktivierten aromatischen Dihalogenverbindungen, beträgt das Molverhältnis der beiden Reaktanden normalerweise 0,9 bis 1,1 zu 1,0. Vorzugsweise setzt man die Verbindungen im Molverhältnis von 1:1 oder mit einem geringen Überschuß der Dihalogenverbindung ein.

Als zweiwertige Phenole kommen Verbindungen der Formel (1)

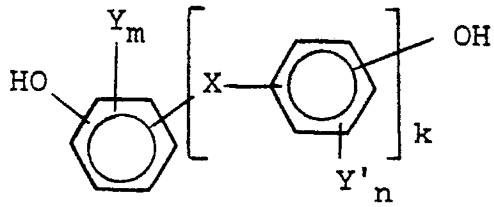 (1)

in Betracht z.B. einkernige Diphenole, wie Hydrochinon, Resorcin oder deren Homologe wie Methylhydrochinon, Phenylhydrochinon.

Andere geeignete Diphenole sind solche, bei denen zwei Phenolreste durch eine direkte Bindung oder durch Atome bzw. Gruppen wie Sauerstoff, Schwefel, Carbonyl-, Sulfonyl-, Sulfoxid-, Alkylidengruppen mit 1-3 C-Atomen im Rest sowie halogenierte Alkylidenreste, Phenylen-, Oxyphenylenoxy-, Carbonylphenylencarbonyl- verknüpft sind. Diese polynuklearen Diphenole lassen sich ebenfalls durch die Formel (1) beschreiben. In dieser Formel stehen Y und $Y'$ für Alkylgruppen oder Alkoxygruppen mit eweils 1 bis 8, vorzugsweise 1 bis 4 C-Atomen, Aryl- oder Aryloxygruppen (Aryl vorzugsweise Phenyl oder Naphthyl) oder Halogenatome, m und n sind unabhängig voneinander null, eins, zwei, drei oder vier (bei Ar = Phenylen) oder mehr (bei anderen Arylresten wie Naphthylen), vorzugsweise Null oder 1, k ist Null, 1 oder 2. X ist eine Alkyliden- oder Cycloalkylidengruppe mit 1-3 C-Atomen in der Alkylidengruppe, sowie deren perfluorierte Derivate oder steht für eine direkte Bindung, -O-, -S-, -SO-, $-SO_2-$, -CO-, $-C_6H_4-$, $-O-C_6H_4-O-$ oder $-CO-C_6H_4-CO-$. Besonders bevorzugt sind Verbindungen der Formel (1), in der X eine direkte Bindung, -O-, -S-, $-SO_2-$, -CO-, $-CH_2-$, $-C(CH_3)_2-$, $-C(CF_3)_2-$, m und n Null und k Null oder 1 ist.

**Beispiele für derartige Diphenole sind:**

2,2-Bis(4'-hydroxyphenyl)propan, 2,2-Bis(4'-hydroxy-3',5'-dimethylphenyl)propan, Bis(4'-hydroxyphenyl)-methan, Bis(4'-hydroxyphenyl) cyclohexan, 1,1-Bis(4'-hydroxyphenyl)ethan, 2,2-Bis(4'-hydroxyphenyl)-1,1,1,3,3,3-hexafluorpropan, 2,2'-Dihydroxydiphenyl, 3,3'-Dihydroxydiphenyl, 4,4'-Dihydroxydiphenyl, 3,4'-Dihydroxydiphenyl, 4,4'-Dihydroxydiphenylether, 4,4'-Dihydroxydiphenylsulfid, 4,4'-Dihydroxydiphenylsulfoxid, 4,4'-Dihydroxydiphenylsulfon, 4,4'-Dihydroxybenzophenon, 1,4 -Bis(4'-hydroxyphenoxy)benzol, 1,3-Bis(4'-hydroxy-phenoxy)benzol, 1,4-Bis(4'-hydroxybenzoyl)benzol, 1,3-Bis(4'-hydroxybenzol-sulfonyl)benzol, 1,3-Bis(4'-hydroxybenzolsulfonyl)benzol.

Die aktivierten aromatischen Dihalogenverbindungen sind ein- oder mehrkernige Verbindungen, deren Halogenatome durch elektronegative Substituenten in o- oder p-Stellung zu ihnen aktiviert sind. Bei mehrkernigen Verbindungen befinden sich die Halogenatome vorzugsweise an verschiedenen Benzolkernen; die elektronegativen Substituenten können hier das Verbindungsglied zwischen den Benzolkernen sein. Geeignete Dihalogenverbindungen sind durch die Formel

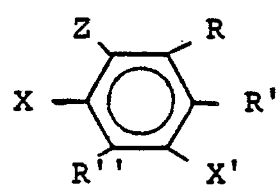 (2)

und

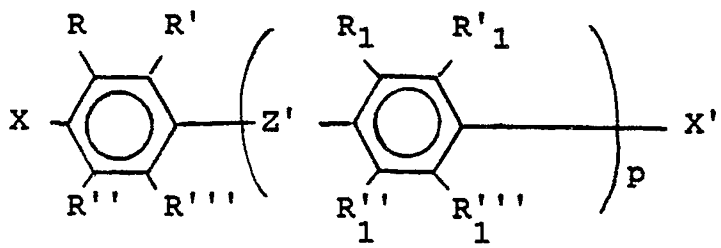 (3)

beschreiben, wobei R,R', R'', R''', $R_1$, $R'_1$, $R''_1$, $R'''_1$ gleich oder verschieden sind und aus der Gruppe Wasserstoff, Alkyl oder Alkoxy (jeweils zweckmäßigerweise mit 1 bis 8, vorzugsweise 1 bis 4 C-Atome),

Aryl oder Aryloxy (Aryl vorzugsweise Phenyl oder Naphthyl) gewählt werden können. Weiter können R und R′, R″ sowie $R''_1$, R‴ und $R'''_1$ auch Alkylidenbrücken oder ankondensierte aromatische Ringe bedeuten. Besonders bevorzugt sind die nur durch H-Atome substituierten Verbindungen. Z und Z′ sind ein- bzw. zweiwertige elektronegative Substituenten, wobei Z′ z.B. für $-SO_2-$, -CO-, -SO-, $-(R_2)-P(O)-$, $-C(=CF_2)-$, $-C[=C(CN_2)]-$ steht und Z eine einwertige elektronegative Gruppe wie $-NO_2$, -NO, $-CF_3$, -CN ist, Z′-Alkyl (Alkyl = $C_1$-$C_8$, vorzugsweise $C_1$-$C_4$) oder -Z′-Aryl (Aryl, vorzugsweise Phenyl oder Naphthyl) bedeuten kann; $R_2$ steht für Alkyl ($C_1$-$C_8$, vorzugsweise $C_1$-$C_4$) oder Aryl (vorzugsweise Phenyl oder Naphthyl). p ist eine ganze Zahl wie 1, 2 oder 3. Für p = 1 kan R′ und $R_1$, zusammen genommen, auch eine direkte Bindung oder eine Alkylidenbrücke bedeuten. Aryliden steht dabei vorzugsweise für 1,2-Phenylen oder 1,2- bzw. 2,3-Naphthylen. X und X′ sind gleich oder verschieden und bedeuten Halogenatome, wobei F und Cl besonders bevorzugt sind. Beispiele geeigneter Dihalogenverbindungen sind: 2,4-Dichlornitrobenzol, 2,4-Difluornitrobenzol, 2,4-Difluorbenzophenon, 4,4′-Dichlordiphenylsulfon, 4,4′-Difluordiphenylsulfon, 4,4′-Dichlorbenzophenon, 4,4′-Difluorbenzophenon, 4,4′-Dichlordiphenylsulfoxid, 4,4′-Difluordiphenylsulfoxid, 1,4-Bis (4′-chlorbenzoyl) benzol, 1,4-Bis(4′-fluorbenzoyl)benzol, 1,3-Bis(4′-fluorbenzoyl)benzol, 1,4′-Bis (4′-chlorbenzolsulfonyl)benzol, 1,4-Bis(4′-fluorbenzolsulfonyl)benzol, 4,4′-Bis(4″-chlorbenzoyl)benzophenon, 4 ,4′-Bis(4″-fluorbenzoyl)benzophenon, 2,5-Bis-(4′-fluorbenzoyl)naphthalin, 3,6-Difluorfluorenon, 3,6-Difluordibenzothiophen-S,S-dioxid, Bis-(4′-fluorphenyl)-phenylphosphinoxid, 1,1-Bis(4′-fluorphenyl)-2,2-dicyanethylen.

Vorzugsweise werden Verbindungen der Formel (4)

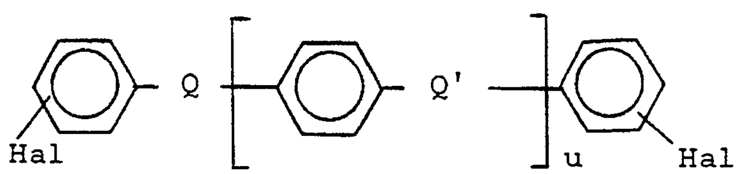

(4)

eingesetzt, worin Hal gleiche oder verschiedene Halogenatome, vorzugsweise F oder Cl, in p- oder o-Stellung sind, Q und Q′ -CO- und/oder $-SO_2-$Gruppen sind und u Null, 1 oder 2 ist.

Erfindungsgemäß verwendbare Halogenphenole sind zwei- oder mehrkernige Phenole, wobei das Halogenatom nicht an dem durch die Hydroxygruppe substituierten Benzolkern steht und durch eine elektronenanziehende Gruppe in ortho- oder para-Stellung aktiviert ist. Sie lassen sich durch die allgemeine Formel

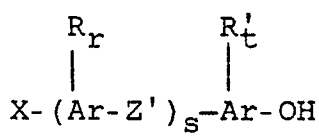

(5)

wiedergeben, wobei Ar einen Arylenrest wie Phenylen oder Naphthylen bedeutet, r, s und t ganze Zahlen wie 1, 2, 3, oder 4 sind; R und R′ können gleich oder verschieden sein und aus der Gruppe Wasserstoff, Alkyl, Alkoxy eweils mit 1-6 C-Atomen, vorzugsweise 1-4 C-Atomen im Alkylrest, Aryl oder Aryloxy ausgewählt sein. Z′ hat die gleiche Bedeutung wie oben. Beispiele geeigneter Halogenphenole sind 4-Fluor-4′-hydroxy-benzophenon, 4-Chlor-4′-hydroxy-benzophenon, 4-Fluor-4′-hydroxy-diphenylsulfon, 4-Chlor-4′-hydroxy-diphenylsulfon, 1-(4′-Hydroxybenzoyl)-4-(4″-chlorbenzoyl)benzol, 1-(4′-Hydroxybenzoyl)-4-(4″-fluorbenzoyl)benzol.

Die erfindungsgemäße Kondensationsreaktion wird entweder in Substanz oder in Gegenwart eines inerten Lösungsmittels durchgeführt, in denen das gebildete Polymere bei der Reaktionstemperatur löslich ist. Als Lösungsmittel kommen beispielsweise in Frage: Diphenylsulfon, cyclische aromatische Sulfone wie Dibenzothiophen-S,S-dioxid oder, weniger bevorzugt, Benzophenon und cyclische aromatische Ketone, z.B. Fluorenon. Derartige Lösungsmittel sind u.a. in der DE-A 2 803 873 beschrieben. In diesem Fall ist es zweckmäßig, daß in einer Lösung einer benzoiden Dihalogenverbindung, in der die Halogenatome durch o- oder p-ständige $SO_2$- oder CO-Gruppen aktiviert sind, bei erhöhter Temperatur Natriumcarbonat und/oder Natriumbicarbonat suspendiert und anschließend die benzoide Dihydroxyverbindung bei erhöhter Temperatur zudosiert wird.

Die Reaktionstemperatur ist im unterem Bereich durch die Schmelztemperatur mindestens einer der Komponenten oder des Lösungsmittels und im oberen Bereich durch die Zersetzungstemperatur der

Kondensationspartner bzw. des Lösungsmittels (falls eingesetzt) begrenzt. Sie beträgt im allgemeinen 100 bis 400 °C, vorzugsweise 180 bis 350 °C, und hängt u.a. von der Reaktivität der Kondensationspartner und der Art des verwendeten Lösungsmittels (falls eingesetzt) ab. Vorzugsweise wird dabei so gearbeitet, daß mit einer niedrigen Reaktionstemperatur begonnen wird und die Temperatur allmählich oder stufenweise gesteigert wird, wenn die Viskosität der Reaktionsmasse steigt.

Falls erforderlich, kann die Kondensationsreaktion in Gegenwart einer kettenabbrechenden Substanz (Regler) durchgeführt werden. Als solche kommen beispielsweise Methylchlorid, t-Butylchlorid, Dimethylsulfat, 4-Chlordiphenylsulfon, 4-Fluorbenzophenon in Frage.

Die erfindungsgemäß erhältlichen Polymeren eignen sich auf Grund ihrer hohen Temperaturbeständigkeit, ihrer Hydrolysebeständigkeit und ihrer anderen Eigenschaften u.a. für Überzüge von elektrischen Kabeln, für Beschichtungen für Drähte und Monofile und für Formteile in elektrischen Geräten.

In den nachfolgenden Beispielen wurde die inhärente Viskosität der erhaltenen Polymeren an einer Lösung von 0,5 g des Polymeren in 100 ml eines geeigneten Lösemittels, z.B. Schwefelsäure für teilkristalline Materialien und N-Methylpyrrolidon für amorphe Materialien bestimmt. Die inhärente Viskosität $\eta$ ist definiert als

$$\eta_{inh} = \frac{\ln \eta_{rel}}{c} \quad \text{mit} \quad \eta_{rel} = \frac{t}{t_o}$$

t : Durchlaufzeit der Lösung
$t_o$: Durchlaufzeit des Lösungsmittels
c : Konzentration des Polymeren in g/ml

**Beispiele**

1) In einen 1-l-Vierhalskolben mit gut wandgängigem Ankerrührer wurden unter Argon-Schutzgasatmosphäre 300 g Diphenylsulfon (= DPS) und 64,4 g 1,4-Bis-(4′-fluorbenzoyl)-benzol (= BFB) eingefüllt, geschmolzen und auf 300 °C erwärmt. In die gut gerührte DPS-Lösung wurde sodann eine pulverförmige Mischung aus 21,6 g Hydrochinon mit 25,5 g Natriumcarbonat innerhalb von 1 Stunde gleichmäßig eingetragen. Das Natriumcarbonat war vor dem Einsatz zur Polykondensation gemahlen und gut getrocknet worden. Die Kornverteilungsanalyse ergab einen Anteil von 50 % kleiner als 5,7 µm und einen Anteil von 90 % kleiner als 11 µm Partikelgröße (D (50 %) = 5,7 µm, D (90 %) = 11 µm). Der schnelle Ablauf der Kondensation kann sowohl über die quantitative Messung des freigesetzten $CO_2$ als auch durch Dünnschichtchromatographie auf restliches BFB verfolgt werden. Dabei zeigte sich, daß 30 Minuten nach der Zugabe des Hydrochinon/Natriumcarbonatgemisches die Reaktion bei vollständigem Verbrauch des BFB einen stationären Zustand erreicht hatte, in dem ein relativ niedermolekulares Polyetherketon vorlag. Dann wurde unter Messung der Viskosität der Reaktionslösung weiteres Hydrochinon in kleinen Portionen im Abstand von 15 Minuten zugegeben. Es wurden dreimal 0,11 g und einmal 0,055 g Hydrochinon zudosiert, so daß die Gesamtmenge an Hydrochinon im Ansatz 21,95 g entsprechend 99,75 % der stöchiometrischen Menge, betrug. Die Gesamtreaktionszeit einschließlich Haupt- und Endkondensation betrug 2 1/2 Stunden.

Die heiße und zähflüssige Schmelze wurde zu dünnen Platten vergossen, die nach Abkühlung und Erstarrung zu einem grobkörnigen Pulver der Körnung 2 mm gemahlen und in üblicher Weise mit Aceton und Wasser erschöpfend extrahiert wurden. Nach der Trocknung wurden 74 g (94 % der Theorie) des Polykondensats mit der Wiederholungseinheit

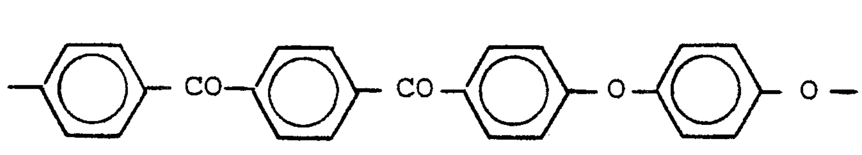

in Form eines weißen Pulvers erhalten.

Dieses löste sich völlig in Schwefelsäure zu einer rotorange gefärbten partikelfreien Lösung. Eine Lösung, die 0,5 g Polykondensat in 100 ml konz. $H_2SO_4$ enthielt, zeigte eine inhärente Lösungsviskosität von 174 ml/g.

2) (Variation des Beispiels 1)

In der in Beispiel 1 beschriebenen Apparatur wurden 300 g Diphenylsulfon und 64,4 g BFB gemischt, geschmolzen und auf 300 °C erwärmt. Bei dieser Temperatur wurden dann 24,4 g feinverteiltes Natriumcarbonat unter gutem Rühren gleichmäßig in der Reaktionslösung verteilt. Das Natriumcarbonat hatte eine Kornverteilung, die einem D (50 %) = 12,7 µm und D (90 %) = 33 µm entsprach. Nach Suspendierung des Natriumcarbonates wurde bei konstanter Temperatur von 300 °C innerhalb von 40 Minuten 21,78 g Hydrochinon zugegeben und der Ansatz 30 Minuten gerührt. Dann wurde im Abstand von jeweils 15 Minuten viermal 0,110 g Hydrochinon nachdosiert. Die vierte Portion führte zu einem steilen Viskositätsanstieg der Reaktionslösung. Nach der Aufarbeitung durch Extraktion mit Aceton und Wasser wurde nach Trocknung 75 g (95,7 % der Theorie) des Polykondensates erhalten, das in 0,5 %iger Lösung in konz. $H_2SO_4$ eine Viskosität von $\eta_{inh}$ = 133 ml/g hatte.

3) (Vergleich 1)

Beispiel 2 wurde wiederholt, jedoch wurde die Siebfraktion eines üblichen kalzinierten Natriumcarbonat eingesetzt, die eine Körnung zwischen 100 und 355 µm hatte. Dabei wurde eine deutlich verringerte Reaktionsgeschwindigkeit beobachtet. Auch noch nach 120 Minuten nach dem Zugeben der Hauptmenge an Hydrochinon (99 mol.-%) wurde langsam Wasser und $CO_2$ entwickelt. Nach 240 Minuten war die Nachreaktion weitgehend abgeklungen und es wurde Hydrochinon in 4 Portionen von 0,110 g nachdosiert, wobei die Wartezeit zwischen den einzelnen Zugaben auf 30 Minuten erhöht wurde. Trotz der verlängerten Reaktionszeit konnte keine Erhöhung der Viskosität der Lösung registriert werden. Nach der Aufarbeitung wurde ein Polykondensat isoliert, das sich zwar rückstandsfrei in $H_2SO_4$ löste, jedoch nur eine Lösungsviskosität von $\eta_{inh}$ = 22,3 ml/g hatte.

4) Polykondensat mit der Wiederholungseinheit

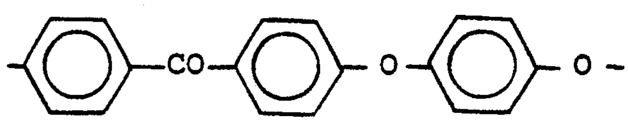

In einem Vierhalskolben wurden 300 g Diphenylsulfon und 65,4 g 4,4′-Difluorbenzophenon geschmolzen und auf 280 °C erwärmt. Als Base wurde gemahlenes Natriumcarbonat gemäß Beispiel 1 verwendet. Davon wurden 38,2 g im Gemisch mit 32,7 g Hydrochinon innerhalb von 50 Minuten in die Reaktionslösung eingetragen. Anschließend wurde der Ansatz für 1 Stunde einer Nachreaktion unterworfen unter Temperaturerhöhung auf 300 °C, wobei eine Viskositätssteigerung eintrat. Die Zugabe von 0,110 g Hydrochinon führte dann innerhalb von 15 Minuten zu einer weiteren Erhöhung der Viskosität der Reaktionslösung. Das gebildete Polykondensat wurde isoliert und gereinigt, wobei 83 g (96 % der Theorie) eines weißen Pulvers erhalten wurden, das sich klar mit orange-roter Farbe in $H_2SO_4$ löst. Die 0,5 %ige Lösung hat eine inhärente Viskosität von $\eta_{inh}$ = 131 ml/g.

5) Polykondensat mit der Wiederholungseinheit

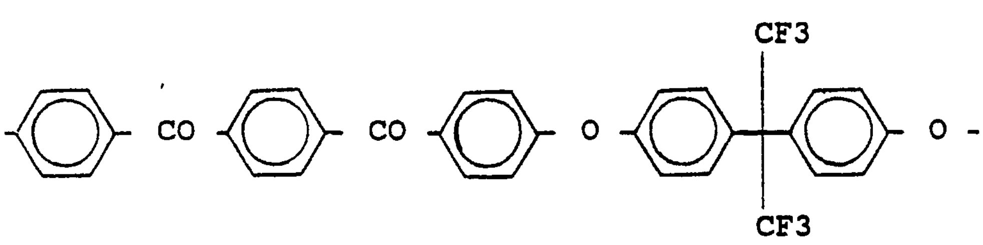

300 g Diphenylsulfon und 64,4 g BFB wurden geschmolzen und auf 280 °C erwärmt. Innerhalb von 50 Minuten wurde ein Gemisch aus 65,86 g 2,2-Bis(4′-hydroxyphenyl)-1,1,1,3,3,3-hexafluorpropan (= 6F-Bisphenol A) und 25,4 g gemahlenes Natriumcarbonat, gemäß Beispiel 2 zugegeben. Unmittelbar nach Beendigung der Dosierung begann die Viskosität der Reaktionsmischung zu steigen. Der Zusatz von 0,34 g 6F-Bisphenol-A führte innerhalb von 20 Minuten zu einem weiteren, starken Viskositätsanstieg. Das Reaktionsprodukt wurde auf ca. 150 °C abgekühlt und mit 1,5 l Dimethylformamid (DMF) verdünnt. Die erhaltene Lösung des Polykondensats wurde filtriert, und die salzfreie Lösung anschließend zur Fällung des Polykondensats in 6 l Methanol eingebracht. Das gefällte Produkt wurde auf einem Filter gesammelt, mit Methanol nachgewaschen und getrocknet. Die Ausbeute betrug 108 g (87,4 % der Theorie). Das Polykondensat hatte in 0,5 %iger Lösung in DMF eine inhärente Lösungsviskosität von 83 ml/g. Aus konzentrierten Lösungen in DMF oder N-Methylpyrrolidon (NMP) wurden transparente Folien gegossen, die nur einen schwachen Gelbton zeigten.

6) Polyetherketon mit der Wiederholungseinheit

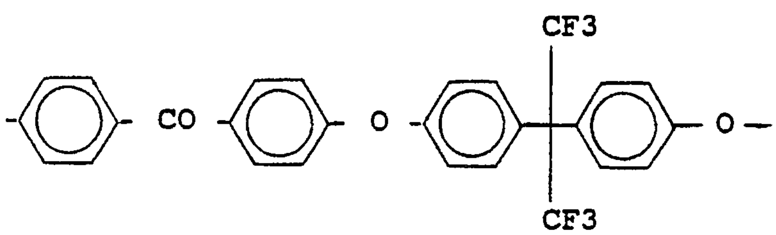

In die 300 °C heiße Lösung von 43,6 g 4,4′-Difluorbenzophenon in 300 g DPS wurde ein Gemisch aus 66,53 g 6F-Bisphenol-A und 25,44 g Natriumcarbonat innerhalb 55 Minuten eingetragen. Das Natriumcarbonat war gemahlen und hatte die Kornverteilung wie in Beispiel 2. Unmittelbar nach Ende des Eintrages begann die Viskosität zu steigen, und innerhalb von 20 Minuten war die Viskosität so hoch, daß die Reaktionslösung nicht mehr gleichmäßig gerührt werden konnte. Es wurde abgekühlt, mit DMF verdünnt und wie in Beispiel 5 aufgearbeitet.
Ausbeute 99,3 g (96,3 % der Theorie). Das Polykondensat hatte in 0,5 %iger DMF-Lösung eine inhärente Lösungsviskosität von $\eta_{inh}$ = 85 ml/g.

7) Polykondensat mit der Wiederholungseinheit

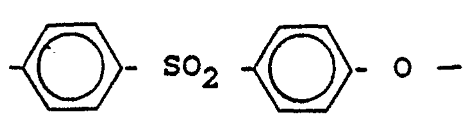

In einem 2-l-Vierhalskolben wurden 400 g Diphenylsulfon und 229,6 g 4,4′-Dichlordiphenylsulfon vorgelegt, geschmolzen und auf 300 °C erwärmt. In dieser Schmelze wurden dann 93,28 g Natriumcarbonat gleichmäßig suspendiert. Das $Na_2CO_3$ war fein gemahlen und hatte eine Kornverteilung, die durch D (50 %) = 9,9 µm und D (90 %) = 40,1 µm charakterisiert war. In diese Reaktionsmischung wurden innerhalb von 75 Minuten 200 g 4,4′-Dihydroxydiphenylsulfon eindosiert und eine Nachreaktion von einer Stunde hinzugefügt, in der die Viskosität der Lösung langsam anstieg. Anschließend wurde 0,5 g 4,4′-Dihydroxydiphenylsulfon zugegeben, wodurch die Viskosität innerhalb von 15 Minuten stark anstieg. Bei Erreichen eines bestimmten Drehmomentes am Rührer wurde die Kondensation durch schnelles Abkühlen auf 250 °C abgebrochen und bei dieser Temperatur 25 g Chlormethan im Verlauf einer Stunde zur Blockierung der Endgruppen durch den Ansatz geleitet. Nach weiterer Abkühlung auf 150 °C wurde die Reaktionsmischung in 2,0 l DMF aufgelöst und zur Abtrennung der Salze über eine Drucknutsche filtriert. Die klare, leicht gelb gefärbte Lösung wurde zur Fällung des Polyethersulfons unter Rühren in ein Fällbad aus 10 l Methanol eingebracht. Der abgeschiedene Feststoff wurde mit Methanol nachgewaschen und getrocknet. In 0,5 %iger

Lösung in DMF wurde eine Viskosität von $\eta_{inh}$ = 52 ml/g gemessen.
Ausbeute 346 g (93,2 % der Theorie).

8) Polykondensat mit der Wiederholungseinheit

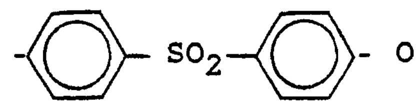

In einem 0,5-l-Vierhalskolben wurden 150 g Diphenylsulfon und 57,4 g 4,4′-Dichlordiphenylsulfon gemischt, geschmolzen und auf 300 °C erwärmt. Dann wurde innerhalb von 65 Minuten ein Gemisch von 49,5 g 4,4′-Dihydroxydiphenylsulfon und 23,32 g Natriumcarbonat eingetragen. Das Natriumcarbonat war gemahlen und hatte die Kornverteilung wie in Beispiel 7 (D (50 %) = 9,9 µm). Bei einer Nachreaktion von einer Stunde steigerte sich die Viskosität der Lösung nur langsam. Anschließend wurden 0,250 g, nach 20 Minuten weitere 0,125 g 4,4′-Dihydroxydiphenylsulfon zugegeben. Dieses bewirkte zunächst einen kleinen Abfall, dann aber einen starken Anstieg der Viskosität der Reaktionslösung. Nachdem die Viskosität nicht weiter anstieg, wurde die Polykondensation durch schnelles Abkühlen auf 250 °C gestoppt und bei dieser Temperatur für 30 Minuten 10 g Chlormethan durch den Ansatz geleitet. Die zähflüssige Reaktionsmischung wurde in kaltes Wasser gegossen, die entstandenen Stränge gemahlen und abschließend mehrfach mit Methanol und Wasser ausgekocht.
Ausbeute: 85,5 g (92,1 % der Theorie). In 0,5 %iger DMF-Lösung wurde eine Viskosität von $\eta_{inh}$ = 51 ml/g ermittelt.

9) (Vergleich 2)

Beispiel 8 wurde wiederholt, jedoch wurde anstelle von gemahlenem Natriumcarbonat die Siebfraktion eines kalzinierten $Na_2CO_3$ mit einer Körnung von 100 bis 355 µm eingesetzt.

Nach Eintrag von 99 % der stöchiometrisch notwendigen 4,4′-Dihydroxydiphenylsulfon-Menge zusammen mit dem Natriumcarbonat wurde in der einstündigen Nachreaktion keine Viskositätserhöhung der Reaktionslösung gemessen. Anschließend wurde fünfmal je 0,250 g Dihydroxydiphenylsulfon nach jeweils 20 Minuten Reaktionszeit zugegeben. Im Gegensatz zu Beispiel 8 wurde dadurch aber keine deutliche Erhöhung der Lösungsviskosität erzielt. Nach insgesamt 3 Stunden Nachreaktionszeit wurde der Ansatz auf 250 °C gekühlt, 14 g Chlormethan durchgeleitet und wie üblich durch Extraktion mit Methanol und Wasser aufgearbeitet. Es wurden 81,7 g (88 % der Theorie) eines Polykondensats isoliert, das in 0,5 %iger DMF-Lösung eine inhärente Viskosität von $\eta_{inh}$ = 16,5 ml/g aufwies.

## Ansprüche

1. Verfahren zur Herstellung eines aromatischen Polyethers durch Kondensation der Reaktionspartner in Gegenwart von Metallcarbonaten der ersten Gruppe des Periodischen Systems als Kondensationshilfsmittel, gegebenenfalls in Gegenwart eines Lösungsmittels, dadurch gekennzeichnet, daß als Kondensationshilfsmittel Metallcarbonate in Form von sehr fein gemahlenen Salzen eingesetzt werden.
2. Verfahren nach Anspruch 1, dadurch gekennzeichnet, daß Natriumcarbonat oder Natriumbicarbonat oder Gemische davon eingesetzt werden und das Natriumcarbonat oder Natriumbicarbonat bei einer Menge von 90 Gew.-% eine Korngröße von kleiner gleich 50 µm aufweist (D (90 %) ≦ 50 µm), vorzugsweise ≦ 30, insbesondere ≦ 20 µm.
3. Verfahren nach Anspruch 1 oder 2, dadurch gekennzeichnet, daß man das Carbonat oder Bicarbonat in einer Menge einsetzt, die 1 bis 1,2 Atome Na pro Phenolgruppe entspricht.
4. Verfahren nach einem oder mehreren der Ansprüche 1 bis 3, dadurch gekennzeichnet, daß die Kondensationsreaktion in einem aromatischen Sulfon, bevorzugt in Diphenylsulfon ausgeführt wird.
5. Verfahren nach einem oder mehreren der Ansprüche 1 bis 4, dadurch gekennzeichnet, daß eine benzoide Dihalogenverbindung der Formel

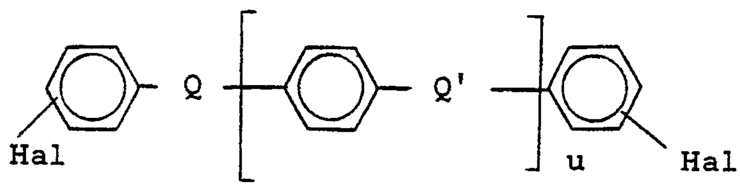

(4)

eingesetzt wird, worin Hal gleiche oder verschiedene Halogenatome in p- oder o-Stellung sind Q und Q′ -CO-und/oder -$SO_2$-Gruppen sind und u Null, 1 oder 2 ist.

6. Verfahren nach einem oder mehreren Ansprüche 1 bis 5, dadurch gekennzeichnet, daß die benzoide Dihydroxyverbindung ein Phenol der Formel

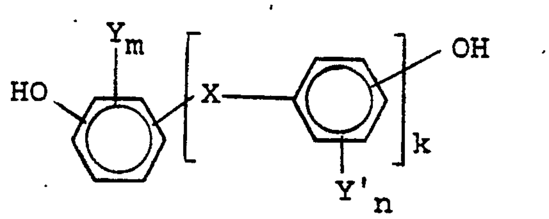

(1)

ist, in der X eine direkte Bindung, -O-, -S-, -$SO_2$-, -CO-, -$CH_2$-, -$C(CH_3)_2$-, -$C(CF_3)_2$-, m und n Null und k Null oder 1 ist.

7. Verfahren nach einem oder mehreren der Ansprüche 1 bis 6, dadurch gekennzeichnet, daß in einer Lösung einer benzoiden Dihalogenverbindung, in der die Halogenatome durch o- oder p-ständige $SO_2$- oder CO-Gruppen aktiviert sind, bei erhöhter Temperatur Natriumcarbonat und/oder Natriumbicarbonat suspendiert und anschließend die benzoide Dihydroxyverbindung bei erhöhter Temperatur zudosiert wird.

8. Verfahren nach einem oder mehreren der Ansprüche 1 bis 7, dadurch gekennzeichnet, daß als Dihalogenverbindung

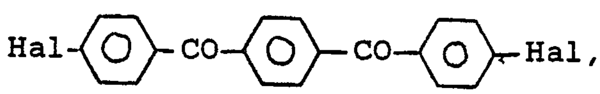

bei der Hal Fluor oder Chlor ist, und als Dihydroxyverbindung Hydrochinon oder 2,2-Bis(4′-hydroxyphenyl)-propan eingesetzt wird.

9. Verfahren nach einem oder mehreren der Ansprüche 1 bis 8, dadurch gekennzeichnet, daß Polyether erhalten werden, die eine inhärente Viskosität von 50 bis 500, vorzugsweise 75 bis 300 ml/g (gemessen in einer Lösung von 0,5 g des Polymeren in 100 ml Lösungsmittel) besitzen.

10. Verfahren nach einem oder mehreren der Ansprüche 1 bis 9, dadurch gekennzeichnet, daß die Reaktion in Gegenwart von Reglern, vorzugsweise Methylchlorid, t-Butylchlorid, Dimethylsulfat, 4-Chlordiphenylsulfon und 4-Fluorbenzophenon, durchgeführt wird.